# EUROPEAN PATENT APPLICATION

(11) **EP 4 400 953 A1**
(43) Date of publication of application: **17.07.2024**
(21) Application number: 23151413.4
(22) Date of filing: 12.01.2023
(51) Int. Cl.: G06F 3/0481, G06F 3/03

(54) **POINTER CANDIDATES FOR TOUCHLESS USER INTERFACE CONTROL**

(71) Applicant: AMERIA AG, 69124 Heidelberg (DE)
(72) Inventor: SEILER, Martin, 79238 Ehrenkirchen (DE)
(74) Representative: Best, Bastian

(57) **Abstract**

A computer-implemented touchless user-interface control method for an electronic display is provided. The method may comprise detecting, based at least in part on data provided by at least one depth sensing device, an input object being suitable for providing touchless user input to the electronic display. The method may comprise capturing a geometric structure corresponding to the input object. The method may comprise determining, based on the geometric structure, a touchless control pointer, wherein the touchless control pointer corresponds to a first protruding portion of the geometric structure that protrudes furthest towards the electronic display. The method may comprise determining, based on the geometric structure, a pointer candidate, wherein the pointer candidate corresponds to a second protruding portion of the geometric structure that protrudes second furthest towards the electronic display.

## Description

### TECHNICAL FIELD

The present invention generally relates to controlling a touchless user-interface, and more particularly to a touchless user-interface control method for an electronic display. Further, the present invention relates to a use of a depth sensing device, in particular a depth camera, in a touchless user-interface control method, and to a data processing apparatus for carrying out a touchless user-interface control method.

### BACKGROUND

Electronic displays have nowadays become omnipresent in various areas of modern life. Examples include electronic display screens or electronic display projectors in public places which provide useful information to the user, e. g. in shopping malls, trade shows, train stations, airports, and the like, a field which is commonly termed "digital signage". One form of such electronic displays are touchscreens that provide a user-interface including interactive functions to allow users to interact with the information, e. g. by selecting control elements such as buttons, selecting items from a list, controlling a cursor, and the like. Such public touchscreens are nowadays used e. g. in ticketing machines, check-out systems in supermarkets or restaurants, interactive signposts, and the like.

However, not least because of the recent COVID-19 pandemic, users have become hesitant to use touchscreens in public places because of health concerns. This has created a desire to provide input capabilities, in particular gesture control, without having to physically touch the display. Some commercial products have already addressed this desire, for example:
The touchless air gesture technology of Gestoos (https://gestoos.com/) aims at transforming touch screens or digital displays into a touch-free experience. The Gestoos technology uses a depth sensor to allow the user to control the mouse cursor of the operating system, mapping the finger coordinates to its screen position, while the fingers stay at a distance from the screen.

GLAMOS (https://www.kickstarter.com/projects/300948436/glamos-bring-your-touchless-screens-to-life), sets out to use lidar technology to turn screens into interactive touch screens.

AlRxTOUCH (https://www.airxtouch.com/) provides an all-in-one touchless interactive kiosk. Depth sensors detect the user's finger before it touches the display and generates click events. The related international patent application WO 2015/139969 provides technological background.

Touchjet (https://www.touchjet.com/wave-lily/) aims at turning flat screen TVs into a tablet for collaboration and interactive presentations using a digital pen.

Ultraleap (https://developer.leapmotion.com/touchfreel) provides leapmotion, which is a small device (infrared camera) with relatively small range for hand tracking and hand gesture recognition. The system uses a single camera, so that the hand recognition precision is limited and decreases the bigger the screen is.

The known technologies provide the control of a touchless user-interface based on detecting an input object, e. g. an input device of a hand. However, the existing solutions on the market are improvable with regard to a smooth and stable user experience, e. g. for reliably detecting touchless control input and providing comprehensible feedback for the user.

It is therefore the technical problem underlying the present invention to provide an improved touchless user-interface control method for an electronic display, thereby at least partly increasing the usability compared to known solutions of the prior art.

### SUMMARY OF INVENTION

The problem is solved by the subject-matter defined in the independent claims. Advantageous modifications of embodiments of the invention are defined in the dependent claims as well as in the description and the figures.

According to a first aspect of the present invention, a computer-implemented touchless user-interface control method for an electronic display is provided. The method may comprise detecting, based at least in part on data provided by at least one depth sensing device, an input object suitable for providing touchless user input to the electronic display. The method may comprise capturing a geometric structure corresponding to the input object. The method may comprise determining, based at least in part on the geometric structure, a touchless control pointer, wherein the touchless control pointer corresponds to a first protruding portion of the geometric structure that protrudes nearest towards the electronic display, i.e. which has the smallest distance to the electronic display compared to other portions of the geometric structure. The method may comprise determining, based at least in part on the geometric structure, a pointer candidate, wherein the pointer candidate corresponds to a second protruding portion of the geometric structure that protrudes second nearest towards the electronic display.

The order of the steps of determining the touchless control pointer and determining the pointer candidate may be variable, for example, it may be provided that the touchless control pointer and the pointer candidate are determined at the same time.

Touchless user-interface control may include any type of interaction of a user with a user-interface without the user being required to make physical contact. In particular, touchless input to an electronic display is included. Examples for touchless inputs are movements of a cursor which is displayed to the user via the electronic display, click operations or gestures.

For touchless user-interface control, in particular for touchless input, an input object may be used. The term input object includes any kind of suitable input objects such as a hand or a finger of a user, a dedicated input device which may for example be a pen or a spherical device.

The term electronic display may include all types of suitable systems for providing a visual user-interface to a user, for example electronic display screens or electronic display projectors or display areas projected onto a surface by a display projector. In particular, the term electronic display screen may include any type of display that is directly powered by electrical energy. In particular, it includes all types of LCD screens, LED screens, touch screens, e-ink screens and the like. The size and shape of the screens may vary.

It may be provided that the electronic display defines an input area. The term input area refers in general to the display layer of the electronic display on which content may be displayed during an interaction of a user and with which a user may interact. The input area may be a spatial input area, the spatial input area being the space which is observed by the depth sensing device(s) in order to recognize user input. The input area may be observed at least partially by the depth sensing devices to recognize touchless inputs of users. For example, the input area may include or be equal to a virtual click layer which is defined to extend distanced by a predetermined distance essentially parallel to the electronic display and which is configured to recognize click inputs or gesture inputs depending on whether an input object penetrates the virtual click layer.

The depth sensing device(s) may for example be stereo vision infrared depth sensing devices. In particular, the depth sensing device(s) may be depth camera(s). One example for such a depth camera is the Intel RealSense depth camera. It may be provided that two depth sensing devices are used, a first and a second depth sensing device. The two depth sensing devices may be placed opposing each other. For example, the first depth sensing device may be placed at or near an upper edge of the electronic display while the second depth sensing device may be placed at or near a lower edge of the electronic display, wherein the depth sensing devices face each other. For example, if the electronic display screen comprises a framing, the first and the second depth sensing device may be mounted at this framing or be integrated in the framing. In other words, the two depth sensing devices may be arranged at opposing borders of the electronic display, for example one being mounted at an upper border and one being mounted at a lower border of the electronic display such that both of the depth sensing devices are able to observe an area which is e. g. parallel to the display layer.

Detecting the input object and capturing a geometric structure corresponding to the input object through the depth sensing device(s) may be performed for example as described in the following:
In case of one depth sensing device, the depth sensing device detects the input object from its perspective, i.e. direction of view. Image data captured by the depth sensing device is thereby obtained. The image data comprises a point cloud or is transformed into a point cloud which may be a set of 3D-points corresponding to the input object. Generally, the 3D-points may be virtual 3D-points not being displayed to a user, but only being used for performing the touchless user-interface control method.

If, for example, two depth sensing devices are used, the first depth sensing device detects the input object from its perspective, i.e., direction of view. The second depth sensing device also detects the input object from its perspective, i.e., direction of view. Image data captured by the first depth sensing device and image data captured by the second depth sensing device are thereby obtained. The image data of the first depth sensing device comprise a point cloud or are transformed into a point cloud which may be the first subset of 3D-points. Accordingly, the image data of the second depth sensing device comprise a point cloud or are transformed into a point cloud which may be the second subset of 3D-points. In other words, a first subset of 3D-points may be obtained by the first depth sensing device, and a second subset of 3D-points may be obtained by the second depth sensing device. The 3D-points of the first subset of 3D-points and the second subset of 3D-points correspond to the input object, but however they may be partly identical points of the input object, or different points of the input object. This depends on whether sections of the input object are detected by only one depth sensing device or by both depth sensing devices. In other words, if both depth sensing devices detect a respective section of the input object, 3D-points of the first subset of 3D-points and 3D-points of the second subset of 3D-points may be defined to be in the same 3D-position, i.e., overlapping. The first and the second subset of 3D-points may be combined in one set of 3D-points to represent the input object at a higher resolution than if it were only represented by one subset of 3D-points. Thus, the position of the input objects can be determined precisely. In particular, form and/or orientation and/or positions of the input object can be tracked, for example to recognize a click input and/or a gesture input but also to recognize the user changing the finger which is intended by the user to provide user input. The 3D-points corresponding to the input object may be understood such as the 3D-points geometrically represent the input object, i.e. being an at least partial virtual representation of the input object.

In case of more than two depth sensing devices, the number of subsets of 3D-points may increase accordingly to be combined into one set of 3D-points. A higher number of depth sensing devices does advantageously further increase the accuracy of the method.

The term geometric structure may be understood in particular as a virtual geometric structure, i.e. an approximate virtual representation of the input object. According to the above-mentioned example of how the input object is captured, the geometric structure may include 3D-points captured by the depth sensing device(s).

The touchless input pointer may be understood as a portion of the input object, respectively of the geometric structure, which is intended to provide touchless user input, e.g. for interacting with the electronic display. Thus, the touchless control pointer is taken as a basis to recognize touchless user input. In other words: Since an input object, respectively the corresponding geometric structure, generally does not only consist of parts that are relevant for a touchless user input, but also has peripheral parts, the part that is relevant for a touchless input must be identified. If the input object is for example a hand, wherein an index finger is extended towards the electronic display, the index finger is the portion of the input object, respectively of the geometric structure, which is relevant for touchless input. At the same time, the index finger is the portion of the input object, respectively of the geometric structure, which protrudes nearest, i.e., most, towards the electronic display.

For other input objects, it is generally applicable that the part of the geometric structure protruding nearest towards the electronic display is the relevant part for touchless user input. Therefore, the step of determining, based at least in part on the geometric structure, a touchless control pointer is performed by determining a first protruding portion of the geometric structure that protrudes nearest towards the electronic display. This first protruding portion is then defined to be the touchless input pointer. Based at least in part on the touchless input pointer, a cursor may be calculated and displayed on the electronic display. The calculation may for example include a perpendicular projection of the touchless control pointer onto the electronic display surface. In another example, the calculation may include a prolongation of the direction in which the protruding portion points, wherein the prolongation is intersected with the electronic display surface, the intersection being set to be the cursor position. Further calculation features such as considering attributes of a user, e.g. the viewing direction or the height of a user may be provided in addition to optimize the cursor position for providing a suitable user experience during touchless interaction.

If 3D-points are used to define the geometric structure, the touchless control pointer may for example be a 3D-point which either is defined as an additional 3D-point based on the set of 3D-points or coincide with one or more 3D-points in the set of 3D-points.

It may be provided that the touchless control pointer corresponds to a center point of the nearest protruding part protruding nearest towards the electronic display. Such center point may correspond for example to the fingertip of a user's finger facing the electronic display. Thus, if a finger is used as an input object, the touchless control pointer may be the fingertip or the center of the fingertip, which is preferably determined from the 3D-points. Preferably, the center of gravity is not determined, but the center of volume is determined. Further, preferably any inhomogeneity of the density of 3D points is factored out so as not to cause any displacement of the touchless control pointer to one side of the finger.

In addition to the touchless control pointer, a pointer candidate is determined based at least in part on the geometric structure. The pointer candidate corresponds to a second protruding portion of the geometric structure that protrudes second nearest towards the electronic display.

For example, if a user uses his or her hand as an input object, the middle finger may be the pointer candidate. In particular, the user may initially form the hand so that the index finger protrudes nearest, i.e., most, in the direction of the electronic display. As described above, the index finger is then defined to be the touchless control pointer. However, the user may have the middle finger also protruding from the hand towards the electronic display as a second nearest protruding portion of the hand. The user could possibly intuitively switch to the middle finger during an interaction and intend to continue the interaction with the middle finger instead of the index finger or intend to perform one click using the middle finger in between during an interaction.

In order to provide the user with a smooth and pleasant user experience, the second nearest protruding portion, which in this example is the middle finger, is defined as the pointer candidate while the user interacts using the index finger. In other words, the pointer candidate is detected and processed in advance. If the user then switches between the fingers during a touchless interaction, there is no interruption and no noticeable latency during the touchless interaction. In particular, at the moment of switching, the pointer candidate can become the touchless control pointer, as described in more detail below.

The method may comprise determining, based on the geometric structure, a further pointer candidate, wherein the further pointer candidate corresponds to a third protruding portion of the geometric structure that protrudes third nearest towards the electronic display.

By defining a further pointer candidate based on a third protruding portion, it is possible to provide a further enhanced user experience, in particular a smooth transition between potential touchless control pointers. For example, some users have the habit of switching between different fingers to perform certain click or swipe gestures. By defining multiple pointer candidates, this switching is anticipated and precalculated as efficiently as possible, so that there is no noticeable latency in the interaction.

It may be provided that the method is performed continuously during a touchless user interaction, in particular wherein the steps of capturing the geometric structure corresponding to the input object, determining the touchless control pointer, and/or determining the pointer candidate(s) are performed continuously during a touchless user interaction. In particular, continuously performing the mentioned steps during a touchless user interaction may be performed automatically.

Alternatively, the method may be performed in predetermined time intervals during a touchless user interaction, in particular wherein the steps of capturing the geometric structure corresponding to the input object, determining the touchless control pointer, and/or determining the pointer candidate(s) are performed in predetermined time intervals during a touchless user interaction.

Continuously performing these method steps or performing the method steps in predetermined time intervals will provide a particularly smooth user experience since not only the touchless control pointer but also the pointer candidate(s) are updated in real-time.

It may be provided that when due to a change in position and/or form of the input object and thus of the geometric structure, the second or third protruding portion becomes the protruding portion protruding nearest towards the electronic display, switching the touchless control pointer is performed, wherein the respective pointer candidate with the respective protruding portion protruding nearest towards the electronic display is defined to be the touchless control pointer.

It may be provided that switching the touchless control pointer is only performed if the difference in how much the second or third protruding portion protrudes towards the electronic display compared to the first protruding portion exceeds a tolerance threshold.

In order to provide a user a convenient user experience, the step of switching the touchless control pointer is to be performed with a low latency. On the other hand, if a user has a second nearest protruding portion which is nearly as much protruding towards the electronic display as the first protruding portion, there is a risk of a negatively affected user experience due to possible jumps or leaps with respect to the definition of the touchless control pointer which is taken as the basis of the user input. By defining a tolerance threshold and in particular by defining that switching the touchless control pointer is only performed if the difference in how much the second or third protruding portion protrudes towards the electronic display compared to the first protruding portion exceeds the tolerance threshold, jumps or leaps with respect to the touchless control pointer are efficiently avoided.

It may be provided that the geometric structure is mapped into a virtual 3D-grid structure comprising voxels, wherein after mapping, at least part of the voxels may encompass parts of the geometric structure.

It may be further provided that determining the touchless control pointer and/or determining the pointer candidate(s) is performed based on the position of the voxels, relative to the electronic display, which encompass parts of the geometric structure.

It may be further provided that the touchless control pointer is determined to be located within or to correspond to a first voxel, the first voxel encompassing nearest protruding parts of the first protruding portion towards the electronic display, and/or that the pointer candidate is determined to be located within or to correspond to a second voxel, the second voxel encompassing nearest protruding parts of the second protruding portion towards the electronic display, and/or that the further pointer candidate is determined to be located within or to correspond to a third voxel, the third voxel encompassing nearest protruding parts of the third protruding portion towards the electronic display.

It may be further provided that the touchless control pointer is determined to be a 3D-point located within a first voxel, the first voxel encompassing nearest protruding parts of the first protruding portion towards the electronic display, and/or that the pointer candidate is determined to correspond to a second voxel, the second voxel encompassing nearest protruding parts of the second protruding portion towards the electronic display, and/or that the further pointer candidate is determined to correspond to a third voxel, the third voxel encompassing nearest protruding parts of the third protruding portion towards the electronic display.

Voxels may be understood to be spatially aligned virtual cuboids, preferably cubes. In particular, these cuboids may be adjacent to each other. Mapping the geometric structure into a virtual 3D-grid structure comprising voxels, i.e. voxel-grid, allows the different portions of the geometric structure to be precisely and separately captured. Using voxels for performing the method of the present invention saves computational resources since the geometric structure is processed in an abstracted manner to determine the touchless control pointer and/or the pointer candidate and/or the further pointer candidate.

For example, if the geometric structure is captured in the form of 3D-points, the 3D-points can be assigned to the respective associated voxels located at a corresponding position in space. Based on the voxels, it is possible to efficiently determine the touchless control pointer and the pointer candidate(s).

For example, the touchless control pointer may correspond or may be calculated based on voxel which is protruding nearest towards the electronic display. Analogously, the pointer candidate may correspond or may be calculated based on voxel which is protruding second nearest towards the electronic display. And the further pointer candidate may correspond or may be calculated based on voxel which is protruding third nearest towards the electronic display. The nearest protruding voxel may accordingly correspond to the nearest protruding portion of the input object, the second nearest protruding voxel may correspond to the second nearest protruding portion of the input object, and/or the third nearest protruding voxel may correspond to the third nearest protruding portion of the input object.

In the case if the touchless control pointer and/or the pointer candidate and/or the further pointer candidate is calculated based on the respective voxel, as mentioned above, various calculation techniques may be used. For example, the geometric center point of a voxel may be determined to be respectively the touchless control pointer, the pointer candidate and/or the further pointer candidate. If 3D-points are captured, the center point may be alternatively determined by weighting of the 3D-points, in particular based on a weighting function. The weighting function may assign weights between 0 and 1 to each of the 3D-points. Preferably, the center of gravity is not determined, but the center of volume is determined. Further, preferably any inhomogeneity of the density of the 3D-points is factored out so as not to cause any displacement of the touchless control pointer to one side of the finger.

It may be provided that the geometric structure includes or consists of a set of 3D-points corresponding to the input object, the set of 3D-points being captured by the at least one depth sensing device.

It may be further provided that determining the touchless control pointer and/or determining the pointer candidate(s) includes assigning weights to the 3D-points and calculating the touchless control pointer and/or the pointer candidate(s) based on the assigned weights.

It may be provided that the step of capturing the geometric structure comprises filtering of noise, in particular filtering of objects which are not part of the input object. This enhances a higher precision in detecting the touchless control pointer and/or pointer candidate and/or further pointer candidate.

According to a second aspect of the present invention, the use of at least a first and a second depth sensing device in a method according to the first aspect of the present invention may be provided. It may be provided that the depth sensing device(s) are depth camera(s).

According to a third aspect of the present invention, a data processing apparatus, preferably an electronic display may be provided, comprising means for carrying out at least part of the method according to the first aspect of the present invention.

According to a fourth aspect of the present invention, a computer program may be provided, comprising instructions which, when the program is executed by a computer, cause the computer to carry out the method according to the first aspect of the present invention.

All technical implementation details and advantages described with respect to the first aspect of the present invention are self-evidently mutatis mutandis applicable for the second, third and fourth aspects of the present invention and vice versa.

### BRIEF DESCRIPTION OF THE DRAWINGS

The disclosure may be better understood by reference to the following drawings:
- Fig. 1a:: A first schematic illustration of an electronic display according to embodiments of the present invention.
- Fig. 1b:: A second schematic illustration of an electronic display according to embodiments of the present invention.
- Fig. 2: A schematic illustration of a spatial input area observed by two depth sensing devices according to embodiments of the present invention.
- Fig. 3:: A schematic illustration of a spatial input area including an illustration of a geometric structure corresponding to a user's hand mapped into a virtual 3D-grid structure according to embodiments of the present invention.
- Fig. 4:: A schematic illustration of an electronic display including an illustration of a geometric structure corresponding to a user's hand mapped into a virtual 3D-grid structure according to embodiments of the present invention.
- Fig. 5a:: A first schematic illustration of a spatial input area including an illustration of a touchless control pointer and pointer candidates derived from a geometric structure corresponding to a user's hand mapped into a virtual 3D-grid structure according to embodiments of the present invention.
- Fig. 5b:: A second schematic illustration of a spatial input area including an illustration of a touchless control pointer and pointer candidates derived from a geometric structure corresponding to a user's hand mapped into a virtual 3D-grid structure according to embodiments of the present invention.
- Fig. 5c:: A third schematic illustration of a spatial input area including an illustration of a touchless control pointer and pointer candidates derived from a geometric structure corresponding to a user's hand mapped into a virtual 3D-grid structure according to embodiments of the present invention.
- Fig. 6a:: A first schematic illustration of an electronic display including an illustration of a touchless control pointer and pointer candidates derived from a geometric structure corresponding to a user's hand mapped into a virtual 3D-grid structure according to embodiments of the present invention.
- Fig. 6b:: A second schematic illustration of an electronic display including an illustration of a touchless control pointer and pointer candidates derived from a geometric structure corresponding to a user's hand mapped into a virtual 3D-grid structure according to embodiments of the present invention.
- Fig. 6c:: A second schematic illustration of an electronic display including an illustration of a touchless control pointer and pointer candidates derived from a geometric structure corresponding to a user's hand mapped into a virtual 3D-grid structure according to embodiments of the present invention.
- Fig. 7a:: A first schematic illustration of an electronic display including an illustration of a touchless control pointer and pointer candidates derived from a geometric structure corresponding to a user's hand according to embodiments of the present invention.
- Fig. 7b:: A second schematic illustration of an electronic display including an illustration of a touchless control pointer and pointer candidates derived from a geometric structure corresponding to a user's hand according to embodiments of the present invention.
- Fig. 7c:: A second schematic illustration of an electronic display including an illustration of a touchless control pointer and pointer candidates derived from a geometric structure corresponding to a user's hand according to embodiments of the present invention.

### DETAILED DESCRIPTION

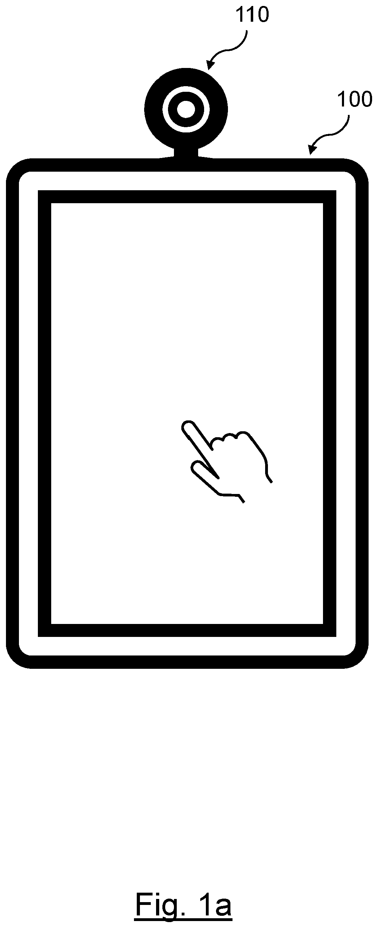

Figure 1a is a first schematic illustration of an electronic display 100. One depth sensing device 110 is mounted at the upper edge of the electronic display 100. The electronic display 100 displays content to a user while providing a visual user-interface to a user. The user may interact with the user-interface using an input object. Examples for the electronic display are electronic display screens or electronic display projectors. The input object may be any kind of suitable input object such as a hand or a finger of a user, a dedicated input device which may for example be a pen or a spherical device.

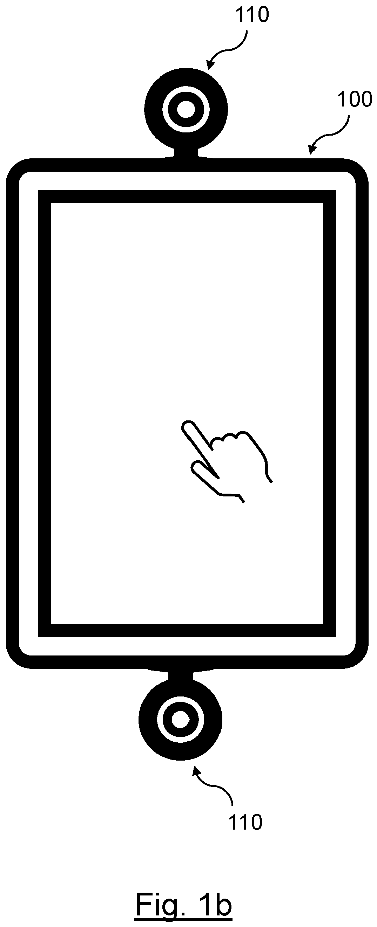

Figure 1b is a second schematic illustration of an electronic display 100. Two depth sensing devices 110 are mounted at a framing of the electronic display 100, one at the upper edge and one at the lower edge.

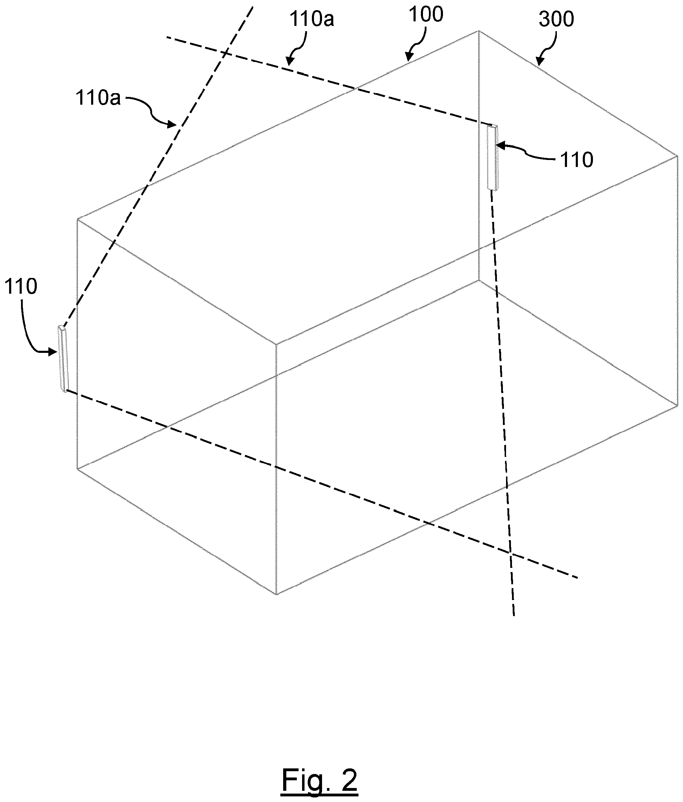

Figure 2 illustrates a spatial input area 300 which is at least partially observed through the field of view 110a of the depth sensing device(s) 110. The surface of the electronic display 100 is not particularly highlighted but it is clear to the skilled person that it essentially corresponds to one side plane of the illustrated spatial input area 300.

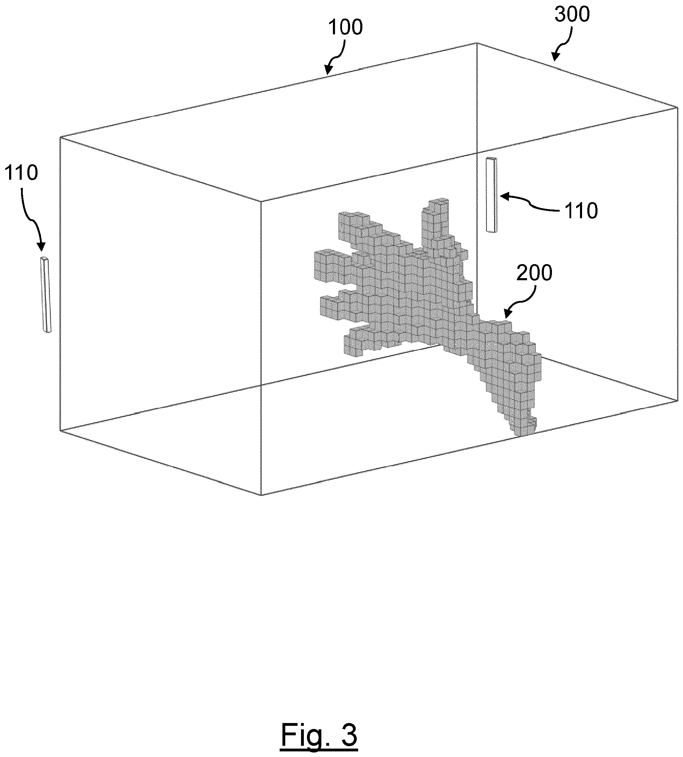

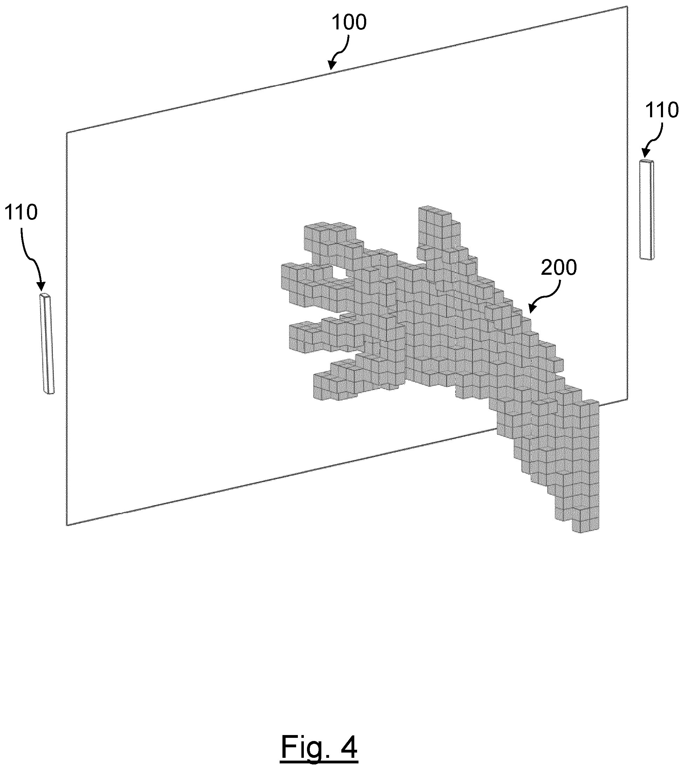

Figures 3 and 4 each show a geometric structure 200 which is mapped into a virtual 3D-grid structure and accordingly illustrated through voxels. The geometric structure 200 is, as can be seen from its shape, corresponding to a user's hand which is used as an input object in this example. In figure 3, the illustration is made showing the geometric structure 200 in the spatial input area 300, while in figure 4 only the electronic display 100 is shown.

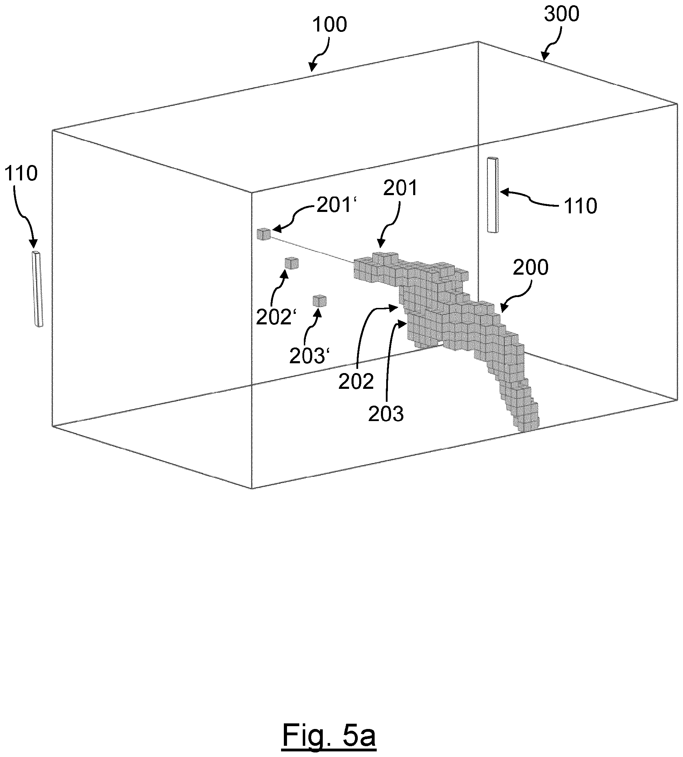

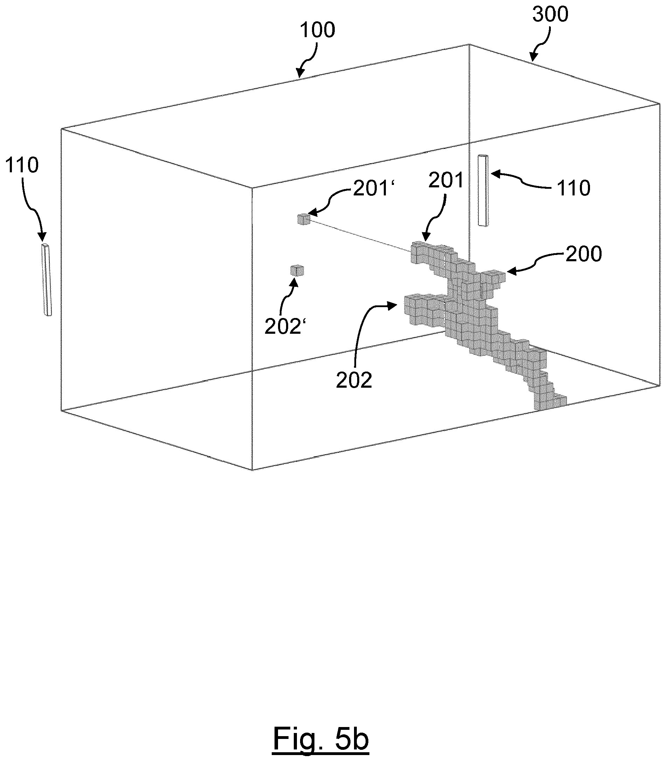

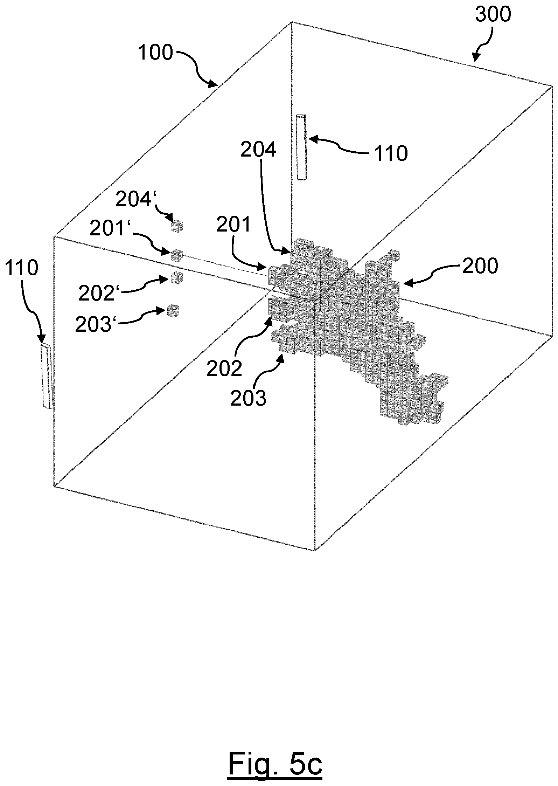

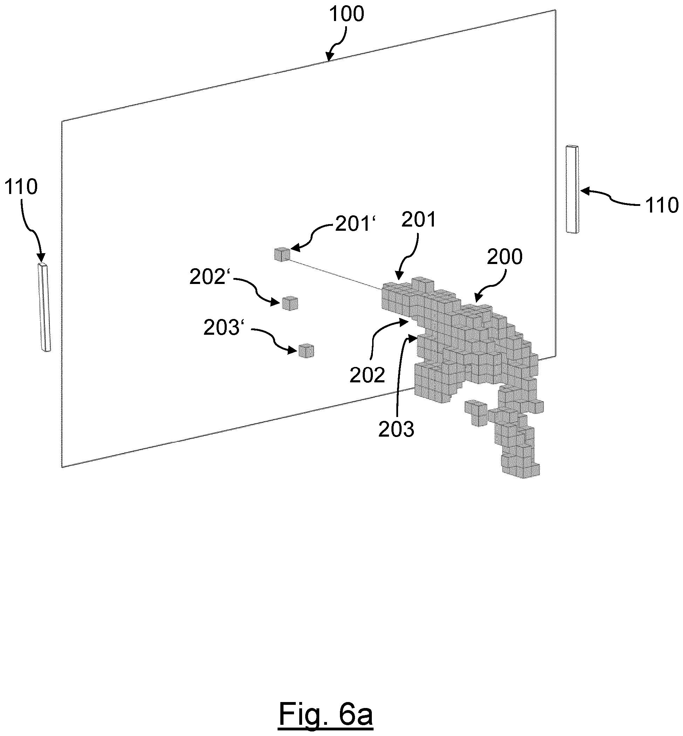

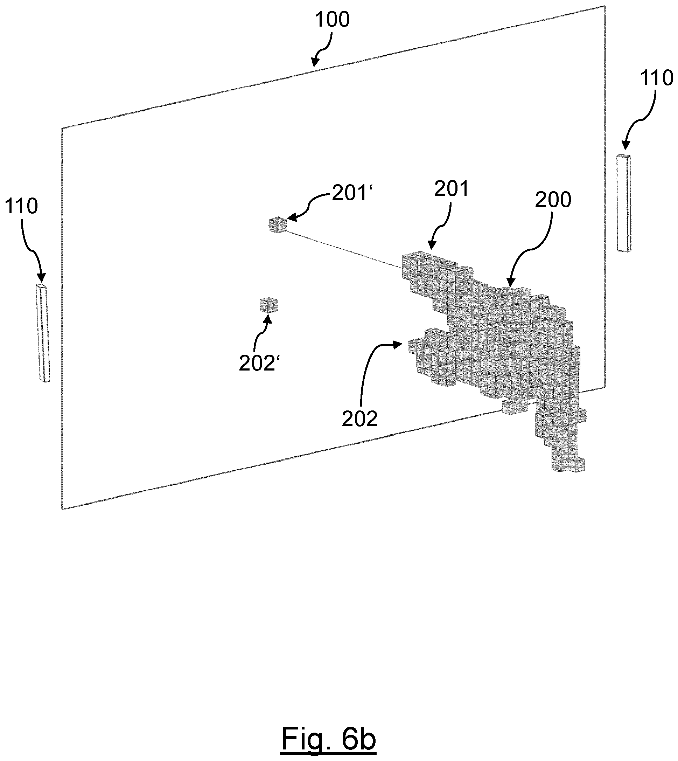

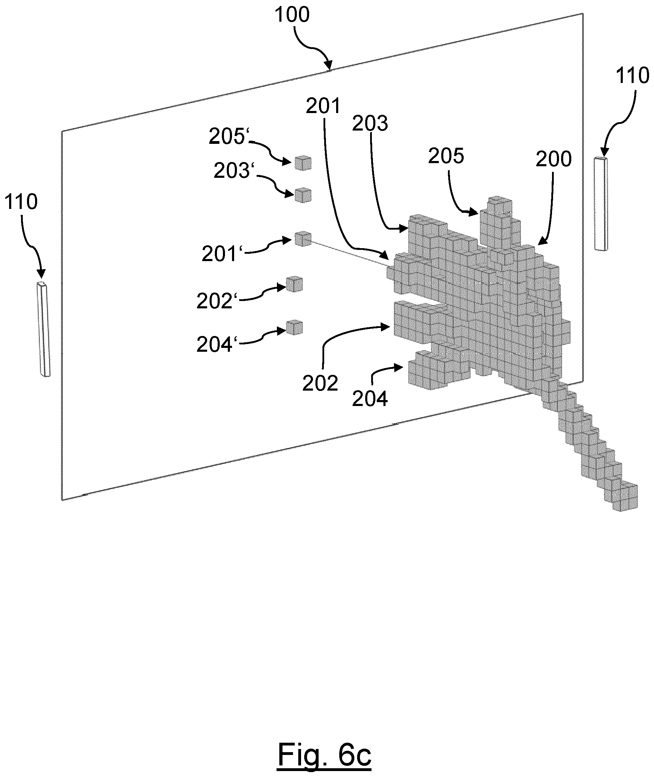

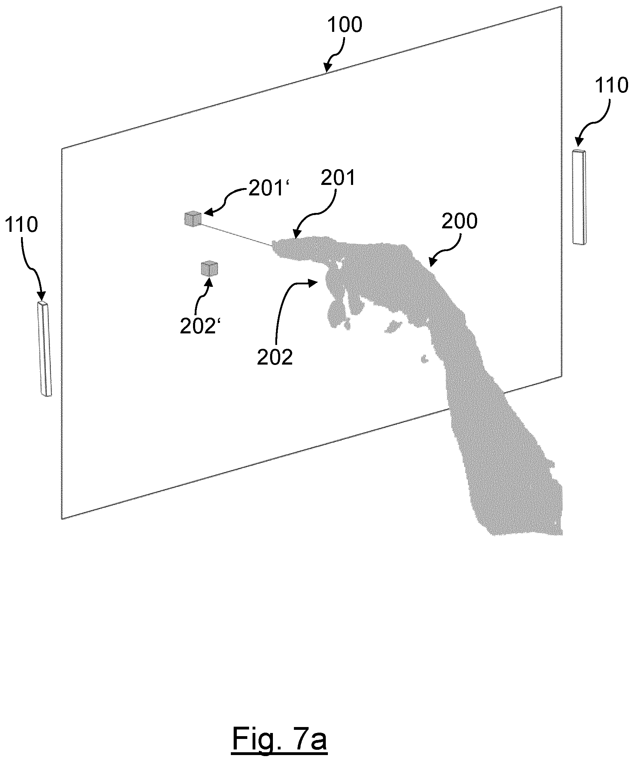

The grouped figures 5a-5c, 6a-6c and 7a-7c only differ in how a particular scene is illustrated but are very similar regarding their content. Therefore, in the following, figures 7a-7c are described in detail while figures 5a-5c and 6a-6c are only discussed briefly.

As can be seen in figure 7a, a user is about to interact with the electronic display using his or her hand as an input object. The input object is captured by the depth sensing devices 110 and a geometric structure 200 corresponding to the input object is built. The geometric structure 200 includes 3D-points in this illustration.

Apparently, the user points at the electronic display 100 by the index finger which is the first protruding portion 201 protruding nearest and/or most towards the electronic display 100 which is determined according to the present invention. Based on this, the touchless control pointer 201' is defined by projecting the tip on the first protruding portion 201 onto the surface of the electronic display 100. The touchless control pointer 201' is illustrated as a voxel on the electronic display 100 for the sake of visibility. It may be provided that a cursor is defined and displayed by the electronic display 100, wherein the cursor corresponds to the touchless control pointer 201'. During interaction, as long as the index finger is the first protruding portion 201 protruding furthest towards the electronic display 100, any user input is preferably only derived from the index finger. Other parts of the hand are not considered relevant for the actual current user interaction.

In addition to the touchless control pointer 201', a pointer candidate 202' is defined. In this illustration, also the pointer candidate 202' is visualized using a voxel on the electronic display 100 for the sake of visibility. The pointer candidate 202' is determined based on a second protruding portion 202 of the geometric structure 200 which protrudes second nearest towards the electronic display 100. This pointer candidate 202' is determined for reducing the latency if the user changes the formation of the hand extending the second protruding portion 202 towards the electronic screen 100 and folding in the first protruding portion 201, having the intention to perform a further interaction with the second protruding portion 202, e.g. the middle finger. In other words, the pointer candidate 202' is detected and processed in advance. If the user then switches between the fingers during a touchless interaction, there is no interruption and no noticeable latency during the touchless interaction.

In particular, at the moment of switching, the pointer candidate 202' can become the touchless control pointer 201'.

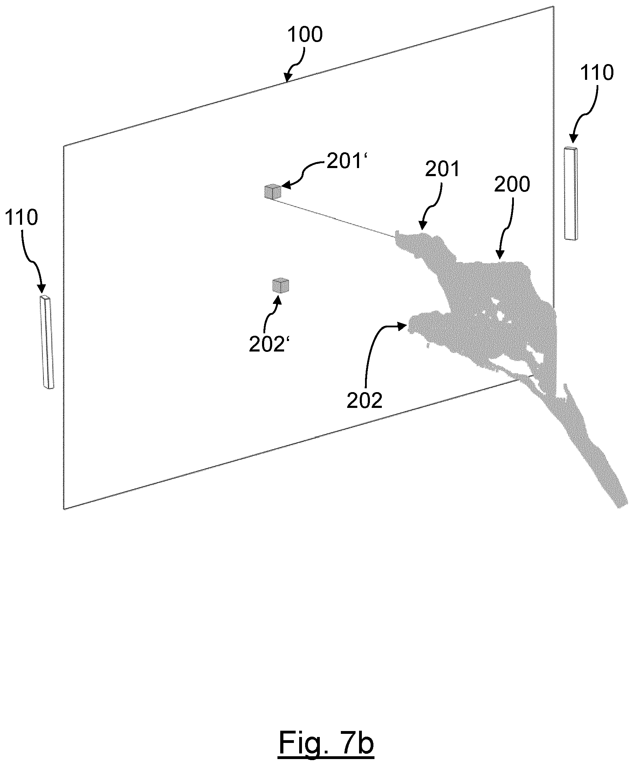

Figure 7b is similar to figure 7a, wherein the second protruding portion 202 of the geometric structure 200 corresponds to the thumb of the user's hand. This is because due to the illustrated formation of the user's hand, the thumb is the second protruding portion 202 protruding second nearest towards the electronic display 100 and therefore the basis for defining the pointer candidate 202'

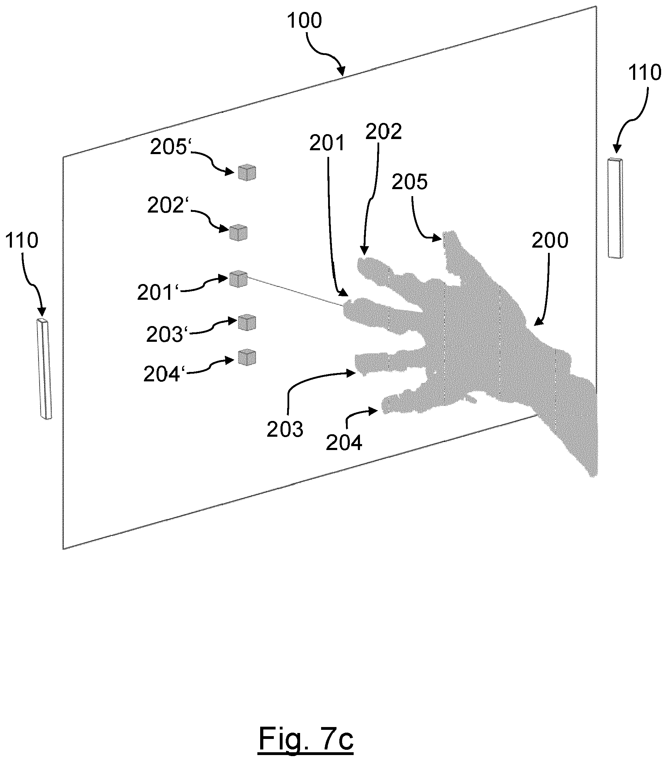

Figure 7c shows very clearly that theoretically any number of pointer candidates 202', 203', 204', 205' can be defined. In this illustration, a hand with five fingers spread apart has been captured by the depth sensing devices 110 and converted into geometric structure 200. As can be seen, the middle finger is the first protruding portion 201 protruding nearest towards the electronic display 100. Based on the first protruding portion 201, the touchless control pointer 201' is defined. Furthermore, it can be seen that each of the other 4 fingers have been recognized as another protruding portion, namely second protruding portion 202, third protruding portion 203, fourth protruding portion 204 and fifth protruding portion 205. Each of these protruding portions 202, 203, 204, 205 was accordingly converted into a pointer candidate 202', 203', 204', 205'. Thus, for example, if the user now folds all fingers except the index finger, which represents the second protruding portion 202, the corresponding pointer candidate 202' is set as the new touchless control pointer 201'.

The user may therefore almost seamlessly switch between the fingers during a user interaction without an essential interruption or noticeable latency. In other words: By defining further pointer candidates based on protruding portions, it is possible to provide a further enhanced user experience, in particular a smooth transition between potential touchless control pointers. For example, some users have the habit of switching between different fingers to perform certain click or swipe gestures. By defining multiple pointer candidates, this switching is anticipated and precalculated as efficiently as possible, so that there is no noticeable latency in the interaction.

In figures 5a-5c and 6a-6c, the geometric structure 200 is illustrated mapped into a virtual 3D-grid structure comprising voxels. Figures 5a-5c and figures 6a-6c differ only in that figures 5a-5c show the spatial input area 300 while figures 6a-6c show the electronic display 100. The above-mentioned benefits and features with respect to figures 7a-7c are mutatis mutandis applicable to figures 5a-5c and figures 6a-6c.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some or all of the method steps may be executed by (or using) a hardware apparatus, such as a processor, a microprocessor, a programmable computer or an electronic circuit. Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments of the invention provide a data carrier having electronically readable control signals, which are capable of cooperating with a programmable computer system, such that one of the methods described herein is performed.

Generally, embodiments of the invention can be implemented as a computer program (product) with a program code, the program code being operative for performing one of the methods when the computer program product runs on a computer. The program code may, for example, be stored on a machine-readable carrier. Other embodiments comprise the computer program for performing one of the methods described herein, stored on a machine-readable carrier. In other words, an embodiment of the present invention is, therefore, a computer program having a program code for performing one of the methods described herein, when the computer program runs on a computer.

A further embodiment of the invention provides a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention provides a data stream or a sequence of signals representing the computer program for performing one of the methods described herein. The data stream or the sequence of signals may, for example, be configured to be transferred via a data communication connection, for example, via the internet.

A further embodiment of the invention provides a processing means, for example, a computer or a programmable logic device, configured to, or adapted to, perform one of the methods described herein.

A further embodiment of the invention provides a computer having installed thereon the computer program for performing one of the methods described herein.

A further embodiment of the invention provides an apparatus or a system configured to transfer (e.g., electronically or optically) a computer program for performing one of the methods described herein to a receiver. The receiver may, for example, be a computer, a mobile device, a memory device, or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### REFERENCE SIGNS

- 100: electronic display
- 110: depth sensing device
- 110a: field of view
- 200: geometric structure
- 201: first protruding portion
- 202-205: second-fifth protruding portion
- 201': touchless control pointer
- 202'-205': pointer candidate
- 300: input area

## Claims

1. A computer-implemented touchless user-interface control method for an electronic display (100), comprising:
detecting, based at least in part on data provided by at least one depth sensing device (110), an input object suitable for providing touchless user input to the electronic display (100);
capturing a geometric structure (200) corresponding to the input object;
determining, based at least in part on the geometric structure (200), a touchless control pointer (201'), wherein the touchless control pointer (201') corresponds to a first protruding portion (201) of the geometric structure (200) that protrudes nearest towards the electronic display (100); and
determining, based at least in part on the geometric structure (200), a pointer candidate (202'), wherein the pointer candidate (202') corresponds to a second protruding portion (202) of the geometric structure (200) that protrudes second nearest towards the electronic display (100).

2. The computer-implemented method of claim 1, further comprising:
determining, based at least in part on the geometric structure (200), a further pointer candidate (203'), wherein the further pointer candidate (203') corresponds to a third protruding portion (203) of the geometric structure (200) that protrudes third nearest towards the electronic display (100).

3. The computer-implemented method of any one of the preceding claims, wherein the method is performed continuously during a touchless user interaction, in particular wherein the steps of capturing the geometric structure (200) corresponding to the input object, determining the touchless control pointer (201'), and determining the pointer candidate(s) (202', 203', 204', 205') are performed continuously during a touchless user interaction.

4. The computer-implemented method of any one of the preceding claims, wherein, when due to a change in position and/or form of the input object and thus of the geometric structure (200), the second or third protruding portion (202, 203) becomes the protruding portion protruding nearest towards the electronic display (100), switching the touchless control pointer (201') is performed, wherein the respective pointer candidate (202', 203') with the respective protruding portion (202. 203) protruding nearest towards the electronic display is defined to be the touchless control pointer (201').

5. The computer-implemented method of claim 4, wherein switching the touchless control pointer (201') is only performed if the difference in how much the second or third protruding portion (202. 203) protrudes towards the electronic display compared to the first protruding portion (201) exceeds a tolerance threshold.

6. The computer-implemented method of any one of the preceding claims, wherein the geometric structure (200) is mapped into a virtual 3D-grid structure comprising voxels, wherein after mapping, at least part of the voxels may encompass parts of the geometric structure (200).

7. The computer-implemented method of claim 6, wherein determining the touchless control pointer (201') and/or determining the pointer candidate(s) (202', 203', 204', 205') is performed based at least in part on the position of the voxels, relative to the electronic display (100), which encompass parts of the geometric structure (200).

8. The computer-implemented method of claim 7,
wherein the touchless control pointer (201') is determined to be located within or to correspond to a first voxel, the first voxel encompassing nearest protruding parts of the first protruding portion (201) towards the electronic display (201), and/or
wherein the pointer candidate (202') is determined to be located within or to correspond to a second voxel, the second voxel encompassing nearest protruding parts of the second protruding portion (202) towards the electronic display (100), and/or
wherein the further pointer candidate (203') is determined to be located within or to correspond to a third voxel, the third voxel encompassing nearest protruding parts of the third protruding portion (203) towards the electronic display (100).

9. The computer-implemented method of claim 8,
wherein the touchless control pointer (201') is determined to be a 3D point located within a first voxel, the first voxel encompassing nearest protruding parts of the first protruding portion (201) towards the electronic display (100), and/or
wherein the pointer candidate (202') is determined to correspond to a second voxel, the second voxel encompassing nearest protruding parts of the second protruding portion (202) towards the electronic display (100), and/or
wherein the further pointer candidate (203') is determined to correspond to a third voxel, the third voxel encompassing nearest protruding parts of the third protruding portion (203) towards the electronic display (100).

10. The computer-implemented method of any one of the preceding claims, wherein the geometric structure (200) includes or consists of a set of 3D points corresponding to the input object, the set of 3D points being captured by the at least one depth sensing device (110).

11. The computer-implemented method of claim 10, wherein determining the touchless control pointer (201') and/or determining the pointer candidate(s) (202', 203', 204', 205') includes assigning weights to the 3D points and calculating the touchless control pointer (201') and/or the pointer candidate(s) (202', 203', 204', 205') based at least in part on the assigned weights.

12. The computer-implemented method of any one of the preceding claims, wherein the step of capturing the geometric structure (200) comprises filtering of noise, in particular filtering of objects which are not part of the input object.

13. Use of at least a first and a second depth sensing device (110) in a method according to any one of claims 1 to 12.

14. A data processing apparatus, preferably an electronic display (100) or a control unit for an electronic display (100), comprising means for carrying out at least part of the method of any one of claims 1 to 12.

15. A computer program or a computer-readable medium having stored thereon the computer program, the computer program comprising instructions which, when the program is executed by a computer, causes the computer to carry out the method of any one of claims 1 to 12.
